**Europäisches Patentamt**

**European Patent Office**

**Office européen des brevets**

(19)

(11) Veröffentlichungsnummer : **0 050 815**
**B1**

# EUROPÄISCHE PATENTSCHRIFT

(12)

(45) Veröffentlichungstag der Patentschrift :
13.06.84

(21) Anmeldenummer : 81108465.6

(22) Anmeldetag : 17.10.81

(51) Int. Cl.³ : **B 01 J 4/00**, B 01 J 8/00,
C 23 C 11/00, G 21 C 3/62

(54) Entladevorrichtung für einen Wirbelschichtofen zur Beschichtung von Brennstoff- und Brutstoffkernen für Kernreaktoren.

(30) Priorität : 25.10.80 DE 3040290

(43) Veröffentlichungstag der Anmeldung :
05.05.82 Patentblatt 82/18

(45) Bekanntmachung des Hinweises auf die Patenterteilung : 13.06.84 Patentblatt 84/24

(84) Benannte Vertragsstaaten :
BE FR GB IT

(56) Entgegenhaltungen :
DE-B- 2 611 844
FR-A- 2 366 870
Die Akte enthält technische Angaben, die nach dem Eingang der Anmeldung eingereicht wurden und die nicht in dieser Patentschrift enthalten sind.

(73) Patentinhaber : **Kernforschungsanlage Jülich Gesellschaft mit beschränkter Haftung**
**Postfach 1913**
**D-5170 Jülich (DE)**

(72) Erfinder : **Schmitz, Heinz, Dr.**
**Damaschkestrasse 24**
**D-5100 Aachen (DE)**

EP 0 050 815 B1

## Beschreibung

Die Erfindung bezieht sich auf eine Entladevorrichtung für einen Wirbelschichtofen zur Beschichtung von Brennstoff- und Brutstoffkernen für Kernreaktoren mit einer Gaszuführungslanze zur Zuführung von Beschichtungsgas und Trägergas, die in einem am Boden des Wirbelschichtofens angeschlossenen Mantelrohr axial verschiebbar und konzentrisch unter Ausbildung eines Ringraums zwischen Mantelrohr und Gaszuführungslanze angeordnet ist, wobei der Ringraum von einem Partikelnaustrag für aus dem Wirbelschichtofen unter Einwirkung der Schwerkraft bei Verschiebung der Gaszuführungslanze austretenden Partikeln abgeschlossen wird.

Es ist bekannt, Brennstoff- und Brutstoffkerne mit einem Durchmesser von einigen 100 µm in einem Wirbelschichtofen durch thermische Zersetzung geeigneter Kohlenwasserstoffe wie Methan, Azetylen, Propan, Propylen oder dergleichen bei Reaktionstemperaturen zwischen 1 000 und 2 200 °C mit Pyrokohlenstoff bzw. Siliziumkarbid zu beschichten, um das Austreten von bei Kernreaktionen entstehenden Spaltprodukten zu verhindern. Zur Ausbildung der Wirbelschicht und zur Verringerung der Konzentration der vorgenannten Beschichtungsgase wird dem Wirbelschichtofen neben dem Beschichtungsgas ein Trägergas wie Argon, Helium, Wasserstoff, Stickstoff, Kohlenmonoxyd oder dergleichen zugeführt, vgl. Deutsche Patentschrift 26 11 844.

Das Beladen des Wirbelschichtofens erfolgt durch Einfüllen der zu beschichtenden Brennstoff- oder Brutstoffkerne in den heißen Wirbelschichtofen. Beschichtungsgas und Trägergas werden mittels einer Gaszuführungslanze durch eine Engstelle am Boden des Wirbelschichtofens eingeführt. Sind die Brennstoff- oder Brutstoffkerne in gewünschter Weise beschichtet, wird der Wirbelschichtofen durch Absaugen der beschichteten Partikeln im allgemeinen mittels einer Lanze oder durch Ausschütten der Partikeln aus dem Reaktionsrohr entleert. Für den Entladevorgang ist der Wirbelschichtofen zuvor abzukühlen.

In der EP-A-41259 wird eine Einrichtung zum Entladen der beschichteten Brennstoff- oder Brutstoffkerne beschrieben, mittels der die beschichteten Partikeln bei Beschichtungstemperatur aus dem Wirbelschichtofen abgezogen werden. Die Einrichtung weist eine Gaszuführungslanze auf, die in einem am Boden des Wirbelschichtofens angeschlossenen Mantelrohr konzentrisch unter Ausbildung eines Ringraumes zwischen Mantelrohr und Gaszuführungslanze angeordnet und axial verschiebbar ist. Soll der Wirbelschichtofen entleert werden, wird das durch die Gaszuführungslanze strömende Beschichtungsgas durch Trägergas ersetzt, die Lanze aus ihrer Betriebsstellung abgesenkt und der Gasstrom so eingestellt, daß die beschichteten Brennstoff- oder Brutstoffkerne durch die Engstelle am Boden des Wirbelschichtofens hindurch in den Ringraum zwischen Mantelrohr und Gaszuführungslanze fallen. Am Boden des Ringraumes ist ein Partikelnaustrag für die beschichteten Kerne angeordnet, durch den die Gaszuführungslanze hindurchgeführt ist. Um zu verhindern, daß in den Zwischenraum zwischen Partikelnaustrag und Gaszuführungslanze Feststoffteilchen wie Ruß oder Teile zerbrochener Partikeln eindringen können, die die Verschiebbarkeit der Gaszuführungslanze beeinträchtigen, wird durch den Zwischenraum ein zu regelnder Spülgasstrom gepreßt.

Aufgabe der Erfindung ist es, eine Gaszuführungslanze zu schaffen, deren Verschiebbarkeit zum Entladen des Wirbelschichtofens ohne erheblichen Aufwand gewährleistet ist.

Diese Aufgabe wird gemäß der Erfindung bei einer Entladevorrichtung der eingangs erwähnten Art durch die im Anspruch 1 angegebene Ausbildung gelöst. Gaszuführungslanze und Partikelnaustrag bilden mit einer Dichthülse, die gasdicht auf dem Mantelrohr verschiebbar geführt ist, eine Einheit. Die erforderlichen Führungs- und Dichtflächen für die verschiebbare Gaszuführungslanze sind somit außerhalb des Transportweges der Partikeln angeordnet, die den Ringraum zwischen Gaszuführungslanze und Mantelrohr durchfallen. Ein die Verschiebbarkeit der Gaszuführungslanze beeinträchtigender Ansatz von Feststoffteilchen auf den Führungs- und Dichtflächen ist somit vermieden. Zur sicheren Führung der Gaszuführungslanze ist die Dichthülse auf dem Mantelrohr derart abgestützt, daß die Gaszuführungslanze im Mantelrohr zentriert wird (Anspruch 2).

Ein Ausführungsbeispiel der Erfindung ist schematisch in der Zeichnung dargestellt. Es zeigen im einzelnen :

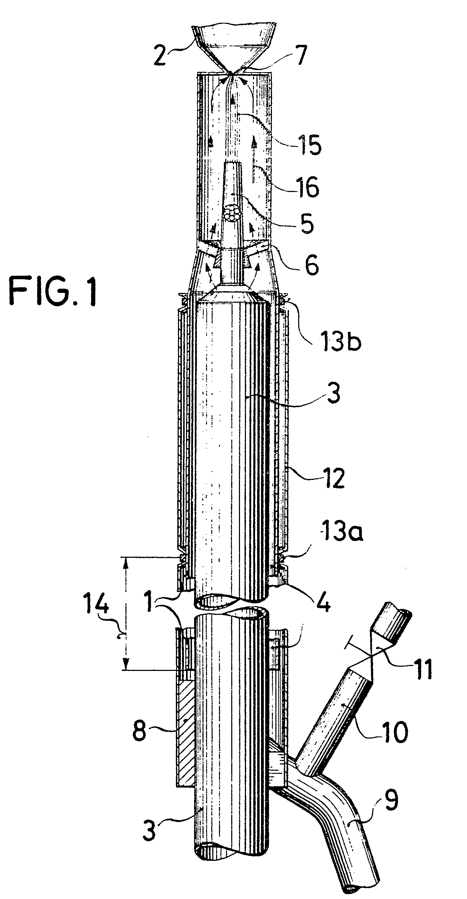

Figur 1 Entladevorrichtung mit Gaszuführungslanze,

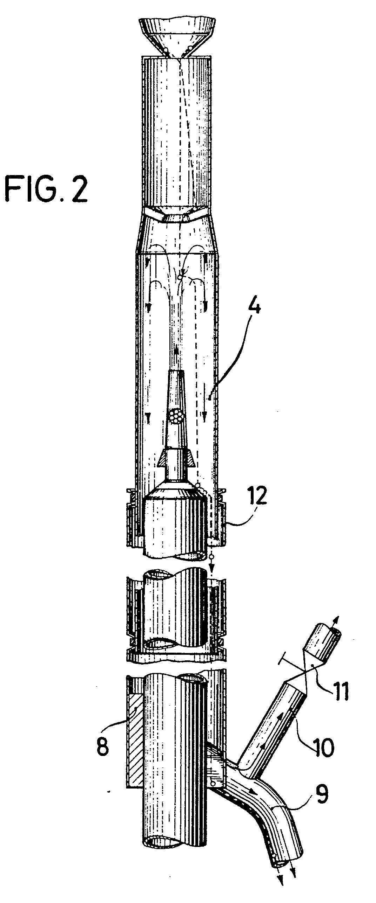

Figur 2 Entladevorrichtung nach Figur 1 in ihrer Stellung beim Entladen von Partikeln.

Wie aus der Zeichnung ersichtlich, ist innerhalb eines Mantelrohres 1, das am Boden 2 eines Wirbelschichtofens angeschlossen ist, eine axial verschiebbare Gaszuführungslanze 3 konzentrisch derart eingesetzt, daß ein Ringraum 4 zwischen der Gaszuführungslanze 3 und der Innenfläche des Mantelrohres 1 verbleibt. Die Gaszuführungslanze 3 endet an ihrem Kopf in einem Zuführungsrohr 5, das durch eine zentrale Bohrung in eine poröse Platte 6 paßt. In Betriebsstellung der Gaszuführungslanze 3 ragt das Zuführungsrohr 5 durch die poröse Platte soweit hindurch, daß das Zuführungsrohr 5 mit Abstand unterhalb einer Blende 7 im Boden 2 des Wirbelschichtofens mündet. Der Durchmesser von Blende 7 ist kleiner bemessen als der lichte Durchmesser der Mündung des Gaszuführungsrohres 5.

Unterhalb des Endes des Mantelrohres 1 befindet sich ein mit der Gaszuführungslanze 3 fest verbundener Partikelnaustrag, der eine Partikelnweiche 8 aufweist, die die aus dem Wirbelschichtofen entnommenen beschichteten Partikeln in ein Abzugsrohr 9 leitet. Das Auszugsrohr ist mit der Partikelnweiche 8 fest verbunden und führt zu einem in der Zeichnung nicht dargestellten Auffangbehälter für die Partikeln. In das Abzugsrohr 9 mündet eine Überströmleitung 10, die durch ein Ventil 11 verschließbar ist.

Fest verbunden mit der Gaszuführungslanze 3 ist neben dem Partikelnaustrag eine Dichthülse 12, die auf der Außenseite des Mantelrohrs 1 über Dichtringe 13a, 13b geführt ist. Die Dichtringe schließen den Ringraum 4 gegenüber dem Au-ßenraum gasdicht ab. Der untere der Dichtringe 13a weist vom Ende des Mantelrohres 1 einen Abstand 14 auf, der zumindest der Verschiebelänge der Gaszuführungslanze 3 entspricht.

Über das Zuführungsrohr 5 der Gaszuführungslanze 3 wird dem Wirbelschichtofen Beschichtungsgas 15 zugeführt. Ein Trägergasstrom 16 umgibt den zentralen Beschichtungsgasstrom und tritt zugleich mit dem Beschichtungsgas 15 durch die Blende 7 in die Wirbelschicht ein.

Zum Entladen des Wirbelschichtofens wird zunächst das durch das Zuführungsrohr 5 strömende Beschichtungsgas 15 durch Trägergas ersetzt und der äußere Trägergasstrom 16 abgestellt. Der Trägergasstrom im Zuführungsrohr 5 wird dabei so reguliert, daß beim Entladevorgang in das Zuführungsrohr keine Partikeln, Ruß oder andere Feststoffteilchen eindringen können. Bei einer solchen Einstellung des Gasstromes verbleiben auch die beschichteten Partikeln noch oberhalb der Blende 7 im Wirbelschichtofen, da der Durchmesser der Blende kleiner ist als der lichte Durchmesser des Zuführungsrohres 5. Nach Absenken der Gaszuführungslanze 3 wird nun das Ventil 11 in der Überströmleitung 10 geöffnet, so daß ein Teil des aus dem Zuführungsrohr 5 ausströmenden Trägergases durch die Überströmleitung 10 entweicht. Die beschichteten Partikeln fallen nun durch die Blende 7 hindurch und werden über den Ringraum 4 zur Partikelnweiche 8 und in das Abzugsrohr 9 geführt. Die Partikelnweiche 8 weist eine schraubenförmige Stirnfläche auf, die zu ihren radialen Begrenzungswänden einen Winkel von 90° aufweist und deren Steigung ein einwandfreies Abgleiten der Partikeln in das Abzugsrohr 9 ermöglicht. Die Führungs- und Gleitflächen auf dem Mantelrohr 1 bleiben beim Entladen der Wirbelschichtkammer frei von Rußansatz und Verschmutzung durch Partikelnbruch. Die Verschiebbarkeit der Gaszuführungslanze 3 ist so gewährleistet.

## Ansprüche

1. Entladevorrichtung für einen Wirbelschichtofen zur Beschichtung von Brennstoff- und Brutstoffkernen für Kernreaktoren mit einer Gaszu-führungslanze zur Zuführung von Beschich-tungsgas und Trägergas, die in einem am Boden des Wirbelschichtofens angeschlossenen Mantelrohr axial verschiebbar und konzentrisch unter Ausbildung eines Ringraumes zwischen Mantelrohr und Gaszuführungslanze angeordnet ist, wobei der Ringraum von einem Partikelnaustrag für aus dem Wirbelschichtofen unter Einwirkung der Schwerkraft bei Verschiebung der Gaszuführungslanze austretenden Partikeln abgeschlossen wird, dadurch gekennzeichnet, daß die Gaszuführungslanze (3) mit dem Partikelnaustrag (8, 9) fest verbunden ist und eine Dichthülse (12) aufweist, die gasdicht und verschiebbar auf dem Mantelrohr (1) geführt ist.

2. Entladevorrichtung nach Anspruch 1, dadurch gekennzeichnet, daß die Dichthülse (12) auf dem Mantelrohr (1) derart abgestützt ist, daß die Gaszuführungslanze (3) im Mantelrohr (1) zentriert wird.

## Claims

1. Emptying apparatus for a fluidised-bed oven for the coating of fuel and breeder material cores for nuclear reactors, with a gas introduction lance for the introduction of coating gas and carrier gas, which lance is arranged axially displaceably and concentrically in a casing tube connected to the bottom of the fluidised-bed oven, forming an annular chamber between the casing tube and the gas introduction lance, and the annular chamber is closed by a particle discharge device for particles issuing from the fluidised-bed oven under the action of gravitational force on displacement of the gas introduction lance, characterised in that the gas introduction lance (3) is connected securely to the particle discharge device (8, 9) and comprises a sealing sleeve (12) which is guided in gas-tight manner and displaceably on the casing tube (1).

2. Emptying apparatus according to claim 1, characterised in that the sealing sleeve (12) is so supported on the casing tube (1) that the gas introduction lance (3) is centred in the casing tube (1).

## Revendications

1. Dispositif de déchargement d'un four à lit fluidisé destiné à l'enrobage de noyaux de matière combustible et de matière fertile pour des réacteurs nucléaires, comprenant une lance pour amener du gaz d'enrobage et du gaz porteur, qui peut coulisser axialement dans un tube-enveloppe raccordé au fond du four à lit fluidisé et qui est disposée concentriquement entre le tube-enveloppe et la lance d'amenée des gaz en formant une chambre annulaire fermée par un dispositif d'évacuation pour les particules sortant du four à lit fluidisé sous l'effet de la force de gravité lors du coulissement de la lance d'amenée des gaz, caractérisé en ce que la lance d'amenée des gaz (3) est reliée rigidement au dispositif d'évacuation (8, 9) des particules et présente un manchon d'étanchéité (12), qui est étanche au gaz et qui peut être guidé en coulissant sur le tube-enveloppe (1).

2. Dispositif de déchargement suivant la revendication 1, caractérisé en ce que le manchon (12) d'étanchéité est appuyé sur le tube-enveloppe (1) de manière à ce que la lance d'amenée des gaz (3) soit centrée dans le tube-enveloppe (1).

FIG.1

# FIG. 2